# DEMANDE DE BREVET EUROPEEN

(11) **EP 3 121 062 A1**
(43) Date de publication de la demande: **25.01.2017**
(21) Numéro de dépôt: 16180907.4
(22) Date de dépôt: 22.07.2016
(51) Int. Cl.: B60Q 1/08, B60Q 1/14, B60Q 1/12, B60Q 1/52, B61D 29/00

(54) **SYSTÈME D'ÉCLAIRAGE AUTO-ADAPTIF POUR VÉHICULE DE TRANSPORT PUBLIC URBAIN**

(30) Priorité: 24.07.2015 FR 1557116
(71) Demandeur: ALSTOM Transport Technologies, 93400 Saint-Ouen (FR)
(72) Inventeur: LE-BASTARD, Jean, 78000 Versailles (FR); TERRIER, Jean-Luc, 59880 Saint Saulve (FR)
(74) Mandataire: Lavoix

(57) **Abrégé**

Ce système d'éclairage comporte un ensemble d'au moins deux sources d'éclairage (14i) émettant chacune selon une direction générale (Di) d'émission distincte, chacune avec une intensité lumineuse indépendante de celles des autres sources d'éclairage (14i), formant un cône de lumière (Ci) centré sur la direction générale d'émission (Di) correspondante, des moyens de détection d'objets environnant dans chacun desdits cônes de lumière (Ci), propres à détecter au moins un sujet sensible dans au moins l'un desdits cônes de lumière (Ci), et un module de contrôle relié avec l'ensemble de sources d'éclairage (14) et avec les moyens de détection d'objets environnant, propre à contrôler l'intensité lumineuse d'au moins l'une des sources d'éclairage (14) en fonction d'une position d'un sujet sensible détecté par les moyens de détection.

## Description

La présente invention concerne un système d'éclairage adaptatif pour un véhicule de transport public urbain, notamment un véhicule ferroviaire urbain, et plus particulièrement un tramway.

Il est à noter que l'invention s'applique préférentiellement à toute sorte de véhicule ferroviaire, mais pourrait en variante être appliquée à tout véhicule non-ferroviaire.

Habituellement, un système d'éclairage pour un véhicule de transport urbain présente au moins deux modes d'éclairages, notamment un premier mode d'éclairage pour un éclairage de forte intensité et un second mode d'éclairage pour un éclairage de faible intensité.

Le premier mode d'éclairage permet d'optimiser la vision du conducteur du véhicule urbain dans des situations sans luminosité naturelle, ou avec une faible luminosité naturelle.

Le second mode d'éclairage permet normalement d'éviter un éblouissement des personnes extérieures au véhicule de transport urbain.

Par exemple, on connait déjà, dans l'état de la technique, notamment d'après WO 2014/023554 A1 un tel système d'éclairage permettant un éclairage avec différentes intensités d'illumination pour un véhicule ferroviaire urbain. Il est à noter que ce système d'éclairage nécessite l'intervention du conducteur pour régler l'intensité de l'éclairage.

Ainsi, ce système présente des risques de causer l'éblouissement de sujets sensibles, comme des conducteurs de voiture, des conducteurs de véhicules de transport public, des cyclistes, des personnes et des animaux à l'extérieur du tramway.

Il est donc de la responsabilité du conducteur d'un tramway de veiller à adapter le mode d'illumination de l'éclairage de son tramway. Cependant, dans une situation de stress ou de manque d'attention, il peut arriver que le conducteur n'adapte pas de manière appropriée le mode d'illumination de l'éclairage, au détriment de la sécurité desdits sujets sensibles et/ou du conducteur lui-même. Pour éviter cela, le premier mode d'éclairage n'est généralement pas utilisé, mais la vision du conducteur n'est alors pas optimisée.

La présente invention a notamment pour but de proposer un système d'éclairage adaptatif, apte à minimiser les risques d'éblouissement des sujets sensibles, tout en conservant un éclairage optimal pour le conducteur du véhicule. Ainsi la sécurité des sujets sensibles et du conducteur de tramway est améliorée.

A cet effet, l'invention a pour objet un système d'éclairage adaptatif, notamment de véhicule ferroviaire urbain, caractérisé en ce qu'il comporte :
- un ensemble d'au moins deux sources d'éclairage émettant chacune selon une direction générale d'émission distincte, chacune avec une intensité lumineuse indépendante de celles des autres sources d'éclairage, formant un cône de lumière centré sur la direction générale d'émission correspondante,
- des moyens de détection d'objets environnant dans chacun desdits cônes de lumière, propres à détecter au moins un sujet sensible dans au moins l'un desdits cônes de lumière, et
- un module de contrôle relié avec l'ensemble de sources d'éclairage et avec les moyens de détection d'objets environnant, propre à contrôler l'intensité lumineuse d'au moins l'une des sources d'éclairage en fonction d'une position d'un sujet sensible détecté par les moyens de détection.

Les avantages d'un tel système d'éclairage sont multiples et sont résumés de manière non-exhaustive ci-dessous.

Le système d'éclairage selon l'invention permet une illumination avec une intensité lumineuse maximale, par exemple supérieure à 3 lux, selon une direction générale d'émission dans laquelle aucun sujet sensible ne se trouve, et en même temps une illumination inférieure, par exemple avec une intensité lumineuse inférieure à 3 lux, selon une direction dans laquelle un sujet sensible se trouve. Ainsi, les conditions de vue pour le conducteur du tramway sont presque inchangées, tout en protégeant le sujet sensible de l'éblouissement.

Avantageusement, un système d'éclairage selon l'invention peut comporter l'une ou plusieurs des caractéristiques suivantes, prises seules ou selon toutes combinaisons techniquement envisageables :
- le module de contrôle maintient constante l'intensité lumineuse de chaque source d'éclairage pour laquelle aucun sujet sensible n'est détecté dans sa direction générale d'émission, et diminue l'intensité lumineuse de chaque source d'éclairage pour laquelle au moins un sujet sensible est détecté dans sa direction générale d'émission ;
- le module de contrôle modifie l'intensité lumineuse de chaque source d'éclairage en fonction de la vitesse du véhicule ferroviaire ;
- le module de contrôle est configuré pour adapter l'intensité lumineuse des sources d'éclairage dans un délai temporel inférieur à 0,5 s après la détection d'un sujet sensible ;
- le module de contrôle est configuré pour qu'au moins l'une des sources d'éclairage émette un premier signal d'avertissement en direction d'au moins un sujet sensible détecté ;
- le module de contrôle est configuré pour qu'au moins l'une des sources d'éclairage émette un deuxième signal d'avertissement en direction d'au moins un sujet sensible détecté en fonction d'une distance mesurée entre le sujet sensible détecté et le véhicule ferroviaire ;
- le module de contrôle est configuré pour modifier les intensités lumineuses des sources d'éclairage en fonction d'indicateurs de direction détectés par les moyens de détection ; et
- les moyens de détection comportent une caméra et/ou un radar et/ou un capteur de présence.

L'invention concerne également un véhicule ferroviaire, caractérisé en ce qu'il comporte un système d'éclairage tel que défini précédemment.

L'invention a aussi pour objet un procédé d'éclairage, notamment par un véhicule ferroviaire urbain, caractérisé en ce qu'il comporte :
- une étape d'émission d'une lumière par un ensemble d'au moins deux sources d'éclairage émettant chacune selon une direction générale d'émission distincte, chacune avec une intensité lumineuse indépendante de celles des autres sources d'éclairage,
- une étape de détection d'objets environnant dans chacune desdites directions générales, par des moyens de détection propres à détecter au moins un sujet sensible dans au moins l'une desdites directions générales,
- lorsqu'au moins un sujet sensible est détecté dans au moins l'une des directions générales, une étape de réglage de l'intensité lumineuse de chaque source d'éclairage, par un module de contrôle relié avec l'ensemble de sources d'éclairage et les moyens de détection d'objets environnant en fonction d'une position de l'au moins un sujet sensible détecté par les moyens de détection.

De manière optionnelle, l'étape de réglage comporte une étape d'adaptation dans laquelle le module de contrôle maintient constante l'intensité lumineuse de chaque source d'éclairage pour laquelle aucun sujet sensible n'est détecté dans sa direction générale d'émission, et diminue l'intensité lumineuse de chaque source d'éclairage pour laquelle au moins un sujet sensible est positionné dans sa direction générale d'émission.

L'invention sera mieux comprise à la lecture de la description qui va suivre, donnée uniquement à titre d'exemple et faite en se référant aux dessins sur lesquels :
- la figure 1 est une vue schématique du système d'éclairage selon un exemple de mode de réalisation de l'invention ; et
- la figure 2 est une vue du dessus des directions d'éclairage du système d'éclairage de la figure 1.

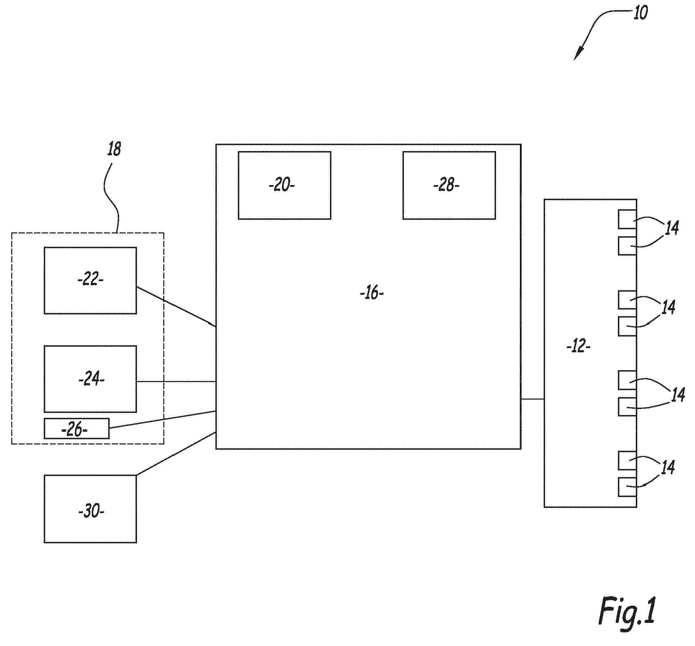

On a représenté, sur la figure 1, un système d'éclairage 10 selon un exemple de mode de réalisation de l'invention, destiné à équiper un véhicule de transport public urbain, par exemple un véhicule ferroviaire urbain tel qu'un tramway.

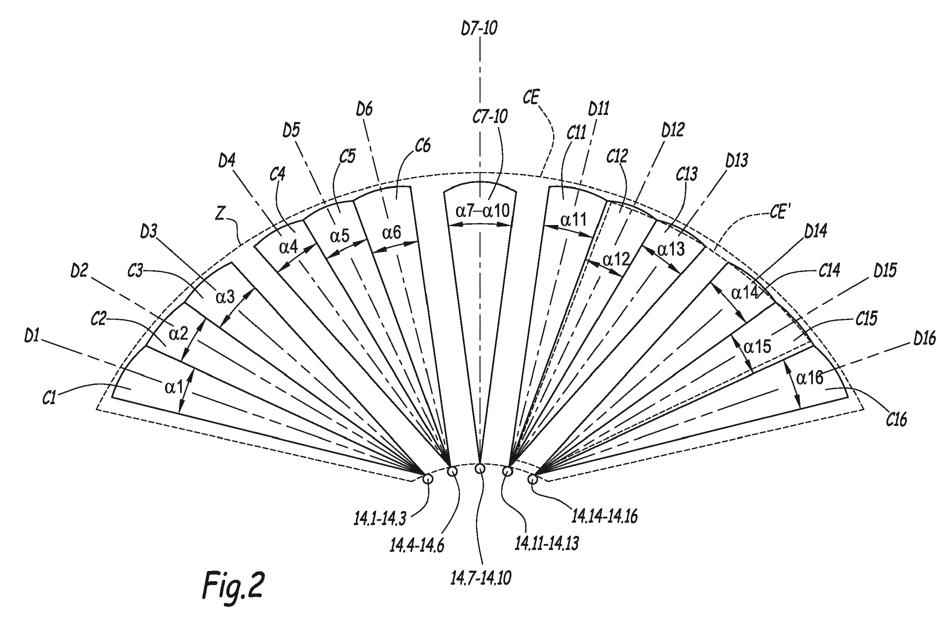

Le système d'éclairage comporte un ensemble 12 d'au moins deux sources d'éclairage. Plus particulièrement, dans l'exemple représenté sur la figure 2, l'ensemble 12 comporte seize sources d'éclairage, désignées par la référence générale 14i (avec i variant de 1 jusqu'au nombre de sources d'éclairage, ici, 16). En variante, l'ensemble 12 pourrait comporter autant de sources d'éclairage 14i que souhaité.

L'ensemble 12 des sources d'éclairage 14i est par exemple agencé sur la partie avant du véhicule ferroviaire urbain.

Les sources d'éclairage 14i par exemple sont choisies parmi des diodes électroluminescentes, des lampes Xénon ou des lampes halogènes.

Chaque source d'éclairage 14i est réglable indépendamment des autres. Plus particulièrement, chaque source d'éclairage 14i présente une intensité lumineuse réglable, et de manière optionnelle peut émettre selon un mode d'éclairage et/ou une couleur modifiables.

Par exemple, un premier mode d'éclairage des sources d'éclairage 14 consiste en une illumination continue, et un deuxième mode d'éclairage consiste en une illumination discontinue.

Avantageusement, chaque source d'éclairage 14i est propre à voir son intensité lumineuse varier depuis une première intensité lumineuse jusqu'à une seconde intensité lumineuse dans un délai temporel inférieur à 0,5 s. La variation de l'intensité lumineuse est de préférence réalisée de manière progressive pendant ce délai temporel.

Chaque source d'éclairage 14i est propre à émettre une lumière ayant une intensité lumineuse maximale égale à une valeur prédéterminée, par exemple supérieure à 3 lux. Chaque source d'éclairage 14i est configurée pour émettre une lumière afin que l'intensité lumineuse reçue par un objet soit sensiblement identique quelle que soit la distance entre cet objet et la source d'éclairage 14i.

Chaque source d'éclairage 14i émet de la lumière dans une direction générale d'émission Di qui lui est propre, dans un cône d'émission Ci centré sur la direction générale d'émission Di correspondante.

Dans l'exemple représenté, certaines sources d'éclairage 14.7 à 14.10 ont leurs directions d'émission D7 à D10 superposées et leurs cônes d'émission C7 à C10 superposés. Ces directions d'émission D7 à D10 confondues correspondent par exemple à une direction longitudinale de conduite du véhicule ferroviaire urbain.

Cette configuration permet d'optimiser l'éclairage de la voie dans la direction de conduite du véhicule.

La direction d'émission D7 est par exemple appelée première direction générale.

Au moins une autre source d'éclairage 14.1 à 14.6 ou 14.11 à 14.16 est orientée selon une autre direction générale D1 à D6 ou D11 à D16 différente de la première direction générale D7.

Plus particulièrement, à l'exception des directions D7 à D10 qui sont confondues, toutes les autres directions générales D1 à D6 ou D11 à D16 sont différentes les unes des autres.

Ainsi, chaque source d'éclairage 14i émet un cône de lumière Ci respectif centré sur sa direction générale Di respective, c'est-à-dire que la direction générale Di d'une source d'éclairage 14i forme un axe de symétrie du cône de lumière Ci correspondant.

Chaque cône de lumière Ci présente un angle d'ouverture αi respectif, de préférence compris entre 4° et 10°.

Les sources d'éclairages 14i forment ensemble un champ d'éclairage total CE.

Par ailleurs, on appellera « champ d'éclairage partiel CE' » un champ d'éclairage formé par une partie seulement de sources d'éclairage 14i adjacentes de l'ensemble 12. L'orientation et l'étendue d'un champ d'éclairage partiel CE' dépend des sources d'éclairage 14i qui le composent.

A titre d'exemple, on a représenté sur la figure 2 le champ d'éclairage total CE, et un exemple de champ d'éclairage partiel CE', formé par certaines sources d'éclairage 14i adjacentes, notamment les sources d'éclairage 14.12 à 14.15.

L'ensemble 12 est relié, comme le montre la figure 1, par exemple par une interface CAN (acronyme anglais pour « Controller Area Network »), à un module de contrôle 16. En variante, l'ensemble 12 par exemple est relié par une interface sans fils au module de contrôle 16.

Le module de contrôle 16 est par exemple formé par un ordinateur ou un microcontrôleur. Le module de contrôle 16 est embarqué sur le véhicule ferroviaire.

Comme on peut voir sur la figure 1, le module de contrôle 16 est dans l'exemple décrit relié électriquement avec des moyens de détection 18 d'objets environnant.

Le module de contrôle 16 comporte par exemple un adaptateur d'énergie électrique 20 destiné à alimenter le module de contrôle 16, et/ou l'ensemble 12 en énergie électrique, par exemple en tension égale à 12V. L'adaptateur d'énergie électrique 20 est alimenté en énergie, par exemple en 24 V, par une batterie du véhicule ferroviaire.

Les moyens de détection 18 d'objets environnant comportent par exemple une ou plusieurs caméras 22, radars 24 et/ou des capteurs de présence 26.

Les moyens de détection d'objets environnant 18 sont agencées sur l'avant du véhicule ferroviaire et orientés avec une direction de détection correspondant par exemple à la direction longitudinale de conduite du véhicule urbain.

Les moyens de détection 18 d'objets environnant sont propres à détecter au moins un objet présent dans des zones de détection correspondant chacune à l'un des cônes de lumière Ci défini par les sources d'éclairages 14i.

L'ensemble des zones de détection forme une zone de danger Z, coïncidant sensiblement avec le champ d'éclairage total CE. Dans cette zone de danger Z, un sujet sensible, notamment un piéton, un conducteur de véhicule ou toute autre personne ou animal, risque d'être ébloui par l'éclairage du tramway.

Pour éviter un tel éblouissement, le module de contrôle 16 est propre à contrôler les variations de fonctionnement des sources d'éclairage 14i de l'ensemble 12, et notamment leurs intensités lumineuses, indépendamment les unes des autres, en fonction des informations fournies par les moyens de détection 18.

De préférence, le module de contrôle 16 comporte un logiciel de reconnaissance, propre à traiter les informations reçues par les moyens de détection 18 d'objets environnant, notamment afin de reconnaître les objets détectées, en particulier pour déterminer si un objet détecté dans la zone de danger Z est un sujet sensible.

Le module de contrôle 16 peut ainsi déterminer, grâce à l'analyse de son logiciel de reconnaissance, quel type de sujet sensible a été détecté, par exemple un train, une voiture, une personne ou un animal.

Par exemple, le logiciel de reconnaissance permet de reconnaitre les sujets sensibles grâce à leurs contours et/ou à l'identification de caractéristiques typiques des sujets sensibles telles que, par exemple, la présence de phares allumés.

En fonction de la zone de détection dans laquelle le sujet sensible est détecté, le module de contrôle 16 règle l'ensemble 12 de sources d'éclairages 14i afin de diminuer l'intensité lumineuse de chaque source d'éclairage 14i dont le cône de lumière Ci coïncide avec cette zone de détection.

Par exemple, l'intensité lumineuse des sources d'éclairages 14i émettant une lumière en direction d'un sujet sensible est diminuée pour devenir sensiblement inférieure à un seuil prédéterminé, par exemple à 3 lux.

Dans le même temps que l'intensité lumineuse est adaptée, le module de contrôle 16 peut de manière optionnelle informer le conducteur du tramway de la détection du sujet sensible.

Parallèlement, un premier signal d'avertissement, par exemple une lumière clignotante peut avantageusement être émise par au moins une source d'éclairage 14i au moins sensiblement selon la direction Di du sujet sensible détecté. Ainsi, l'attention du sujet sensible peut être attirée sur le tramway. Par exemple le premier signal d'avertissement consiste en une émission discontinue d'une lumière colorée ou blanche.

Dans ce cas, pour les autres sources d'éclairages 14i dont aucun sujet sensible n'a été détecté dans la zone de détection correspondant à leur cône de lumière Ci, le module de contrôle 16 maintient l'intensité lumineuse constante.

Le logiciel de reconnaissance des moyens de détection 18 est par ailleurs apte à mesurer la distance entre un sujet sensible détecté et le véhicule ferroviaire urbain en analysant les informations de la caméra 22, du radar 24 ou du capteur de distance 26.

Le logiciel de reconnaissance des moyens de détection 18 est également apte à détecter une vitesse relative d'un sujet sensible, par exemple une vitesse de déplacement en direction du véhicule ferroviaire urbain. Dans le cas d'un tel déplacement, la distance mesurée entre le sujet sensible détecté et le tramway se réduit rapidement.

Dans ce cas, un deuxième signal d'avertissement, par exemple une lumière rapidement clignotante peut être émise par au moins une source d'éclairage 14 au moins selon la direction du sujet sensible détecté. Ainsi, l'attention du sujet sensible peut rapidement être attirée sur le tramway. Par exemple, le deuxième signal d'avertissement consiste en une émission discontinue ayant par exemple une fréquence d'émission d'une lumière colorée supérieure à celle du premier signal d'avertissement.

Avantageusement, le module de contrôle 16 est également apte à contrôler l'intensité lumineuse de chaque source d'éclairage 14i en fonction de la vitesse du tramway à l'aide d'un compteur de vitesse 28 et/ou d'un système de navigation 30, par exemple un système de guidage par satellite. Plus particulièrement, l'intensité lumineuse des sources d'éclairage 14i est augmentée lorsque la vitesse augmente, afin de conserver un champ de vision suffisamment important pour le conducteur.

Avantageusement, le module de contrôle 16 permet également d'évaluer si le tramway va prochainement changer de direction de déplacement, par exemple à l'aide de moyens de détection de la direction des rails et/ou de détection de signaux de position d'aiguille.

Dans ce cas, le module de contrôle 16 règle le champ d'éclairage partiel CE' des sources d'éclairage 14 vers les rails en fonction de la future direction de conduite du tramway. Ce réglage de direction est fait par exemple par l'activation de la source d'éclairage ayant une direction générale d'émission correspondant à la direction des voies. Ainsi, le conducteur a une bonne visibilité, même pendant un passage dans un virage.

Le fonctionnement du système d'éclairage 10 selon l'invention va maintenant être décrit.

Initialement, le système d'éclairage 10 est fourni sur le véhicule.

Le système d'éclairage 10 est activé par le conducteur du tramway lorsqu'il éprouve le besoin d'un éclairage en supplément de l'éclairage naturel.

Une lumière est ainsi émise par chacune des sources d'éclairage 14i selon des directions générales d'émission Di respectives. L'intensité lumineuse de chaque source d'éclairage 14i est identique après l'activation du système d'éclairage 10. De préférence, elle est supérieure à un seuil prédéterminé, par exemple supérieure à 3 lux.

Ensuite, les moyens de détection 18 d'objets environnants sondent l'entourage du tramway et envoient leur signal de détection au module de contrôle 16. Dans l'exemple décrit, la caméra 22 envoie une image au module de contrôle 16.

Le module de contrôle 16 analyse les signaux reçus des moyens de détection d'objets environnant 18 et commande l'ensemble 12 en fonction du résultat de l'analyse.

Pendant l'analyse des signaux reçus par le module de contrôle 16, ce dernier évalue si un sujet sensible a été détecté à l'intérieur de la zone de danger Z. Egalement, il évalue quel type de sujet sensible a été détecté et si le sujet sensible est immobile ou s'il se déplace en direction du tramway ou de sa trajectoire.

Dans le cas où un sujet sensible est détecté, le module de contrôle 16 diminue l'intensité lumineuse de la source d'éclairage 14 dont le cône de lumière Ci illumine le sujet sensible détecté. Cette adaptation de l'intensité est réalisée dans un délai temporel inférieur à 0.5 s après la détection du sujet sensible.

Parallèlement à l'adaptation de l'intensité lumineuse, ledit premier signal d'avertissement peut être optionnellement émis en direction du sujet sensible détecté par au moins une source d'éclairage 14.

Lorsque le sujet sensible se déplace en direction du tramway, le module de contrôle 16 commande les sources d'éclairage 14 pour émettre ledit deuxième signal d'avertissement.

De manière optionnelle, le module de contrôle 16 informe dans le même temps le conducteur du tramway sur la position et/ou le déplacement du sujet sensible.

Comme cela est montré sur la figure 1, le module de contrôle 16 surveille la vitesse de déplacement du tramway à l'aide d'un compteur de vitesse 28 afin d'adapter l'intensité lumineuse de l'ensemble 12 en fonction de cette vitesse. Lorsque le tramway se déplace à une vitesse élevée, l'intensité lumineuse est supérieure à l'intensité lumineuse lors d'un déplacement à plus faible vitesse, car il est préférable dans ce cas d'éclairer plus loin pour conserver un bon champ de vision pour le conducteur.

Lorsque le module de contrôle 16 détecte un virage, notamment par la détection d'indicateurs de direction, la direction d'éclairage de l'ensemble 12 est adapté afin d'éclairer dans la direction du virage. Un tel indicateur peut être la présence des rails ou un signal de position d'aiguillage.

A cet effet, le module de contrôle 16 calcule par exemple un rayon de courbure du virage et active ensuite uniquement au moins les sources d'éclairage 14 pour former un champ d'éclairage partiel CE' permettant d'éclairer le virage.

Grâce à l'adaptation de l'intensité lumineuse de la source d'éclairage 14i éclairant un sujet sensible, l'éblouissement du sujet sensible peut être évité. Cela permet au sujet sensible de mieux estimer des dangers environnants, par exemple une collision avec le tramway. La sécurité pour le sujet sensible et pour le conducteur du tramway est donc améliorée.

Le maintien de la luminosité pour les directions générales dans lesquels aucun sujet sensible n'est détecté permet d'optimiser l'éclairage pour le conducteur. Ainsi, le conducteur se trouve dans une situation d'éclairage optimale pour conduire le tramway, bien que la luminosité vers le sujet sensible soit réduite.

Grâce à l'adaptation horizontale de la direction d'éclairage de l'ensemble 12, le conducteur peut apercevoir un danger potentiel présent sur les voies lors d'un virage, avant de s'engager dans ce virage.

Il apparait clairement que l'invention permet de garantir plus de sécurité au conducteur du tramway ainsi qu'aux sujets sensibles extérieurs au tramway.

Dans un autre mode de réalisation, les moyens de détection d'objets 18 environnant sont formés par le radar 24 ou le capteur de présence 26. De préférence, le radar 24 et/ou le capteur de présence 26 fonctionnent en parallèle avec la caméra 22. Grâce à cette redondance, la sécurité du conducteur et d'un sujet sensible peut être garantie même lors d'un dysfonctionnement de la caméra 22, du radar 24, ou du capteur de présence 26.

Conformément à une variante, le système d'éclairage 10 s'allume automatiquement en fonction de le la luminosité environnante détectée par la caméra 22 du tramway.

Dans un mode de réalisation combinable avec celui décrit précédemment, le système d'éclairage 10 comporte de multiples sources d'éclairages 14i. Les sources d'éclairages 14 sont par exemple alignées en multiples lignes et multiples colonnes sur une partie avant du véhicule ferroviaire faisant face à la direction de conduite. Chaque source d'éclairage 14i comporte une direction générale d'émission individuelle Di avec un cône de lumière Ci.

Cependant, toutes les sources d'éclairage 14i située sur une même colonne présentent des directions générales Di respectives qui s'étendent dans un même plan vertical.

De même, toutes les sources d'éclairage 14i située sur une même ligne présentent des directions générales Di qui s'étendent dans un même plan horizontal. Ainsi, toutes les sources d'éclairage 14i couvrent, par leurs cônes de lumière Ci, toute la zone de danger Z dans laquelle l'éblouissement d'un sujet sensible est possible.

Conformément à une autre variante l'ensemble des cônes de lumière Ci des sources d'éclairage 14i éclaire un champ d'éclairage total CE couvrant au moins 40 m en avant du tramway selon la direction de conduite du tramway, et au moins 2 m à droite et à gauche des rails. Le champ d'éclairage CE permet également d'éclairer l'ensemble des rails formant un virage avec un rayon de courbure du virage supérieur ou égale à 18 m.

On notera que l'invention n'est pas limitée aux modes de réalisation précédemment décrits, mais pourrait présenter diverses variantes complémentaires.

## Revendications

1. Système d'éclairage (10) adaptatif pour un véhicule ferroviaire urbain, **caractérisé en ce qu'**il comporte :
- un ensemble (12) d'au moins deux sources d'éclairage (14i) émettant chacune selon une direction générale (Di) d'émission distincte, chacune avec une intensité lumineuse indépendante de celles des autres sources d'éclairage (14i), formant un cône de lumière (Ci) centré sur la direction générale d'émission (Di) correspondante,
- des moyens de détection (18) d'objets environnant dans chacun desdits cônes de lumière (Ci), propres à détecter au moins un sujet sensible dans au moins l'un desdits cônes de lumière (Ci), et
- un module de contrôle (16) relié avec l'ensemble de sources d'éclairage (14) et avec les moyens de détection d'objets environnant (18), propre à contrôler l'intensité lumineuse d'au moins l'une des sources d'éclairage (14) en fonction d'une position d'un sujet sensible détecté par les moyens de détection (18).

2. Système d'éclairage selon la revendication 1, dans lequel le module de contrôle (16) maintient constante l'intensité lumineuse de chaque source d'éclairage (14) pour laquelle aucun sujet sensible n'est détecté dans sa direction générale d'émission (Di), et diminue l'intensité lumineuse de chaque source d'éclairage (14) pour laquelle au moins un sujet sensible est détecté dans sa direction générale d'émission (Di).

3. Système d'éclairage selon la revendication 1 ou 2, dans lequel le module de contrôle (16) modifie l'intensité lumineuse de chaque source d'éclairage (14) en fonction de la vitesse du véhicule ferroviaire.

4. Système d'éclairage selon l'une quelconque des revendications précédentes, dans lequel le module de contrôle (16) est configuré pour adapter l'intensité lumineuse des sources d'éclairage (14) dans un délai temporel inférieur à 0,5 s après la détection d'un sujet sensible.

5. Système d'éclairage selon l'une quelconque des revendications précédentes, dans lequel le module de contrôle (16) est configuré pour qu'au moins l'une des sources d'éclairage (14) émette un premier signal d'avertissement en direction d'au moins un sujet sensible détecté.

6. Système d'éclairage selon la revendication 5, dans lequel le module de contrôle (16) est configuré pour qu'au moins l'une des sources d'éclairage (14) émette un deuxième signal d'avertissement en direction d'au moins un sujet sensible détecté en fonction d'une distance mesurée entre le sujet sensible détecté et le véhicule ferroviaire.

7. Système d'éclairage selon l'une quelconque des revendications précédentes, dans lequel le module de contrôle (16) est configuré pour modifier les intensités lumineuses des sources d'éclairage en fonction d'indicateurs de direction détectés par les moyens de détection (18).

8. Système d'éclairage selon l'une quelconque des revendications précédentes, dans lequel les moyens de détection (18) comportent une caméra (22) et/ou un radar (24) et/ou un capteur de présence (26).

9. Véhicule ferroviaire, **caractérisé en ce qu'**il comporte un système d'éclairage selon l'une quelconque des revendications précédentes.

10. Procédé d'éclairage pour un véhicule ferroviaire urbain, **caractérisé en ce qu'**il comporte :
- une étape d'émission d'une lumière par un ensemble (12) d'au moins deux sources d'éclairage (14i) émettant chacune selon une direction générale (Di) d'émission distincte, chacune avec une intensité lumineuse indépendante de celles des autres sources d'éclairage (14i),
- une étape de détection d'objets environnant dans chacune desdites directions générales (Di), par des moyens de détection (18) propres à détecter au moins un sujet sensible dans au moins l'une desdites directions générales (Di),
- lorsqu'au moins un sujet sensible est détecté dans au moins l'une des directions générales (Di), une étape de réglage de l'intensité lumineuse de chaque source d'éclairage (14i), par un module de contrôle (16) relié avec l'ensemble de sources d'éclairage (14i) et les moyens de détection (18) d'objets environnant en fonction d'une position de l'au moins un sujet sensible détecté par les moyens de détection (18).

11. Procédé d'éclairage selon la revendication 10, dans lequel l'étape de réglage comporte une étape d'adaptation dans laquelle le module de contrôle (16) maintient constante l'intensité lumineuse de chaque source d'éclairage (14i) pour laquelle aucun sujet sensible n'est détecté dans sa direction générale (Di) d'émission, et diminue l'intensité lumineuse de chaque source d'éclairage (14i) pour laquelle au moins un sujet sensible est positionné dans sa direction générale d'émission (Di).
